(19) **Europäisches Patentamt / European Patent Office / Office européen des brevets**

(11) **EP 3 266 256 B1**

(12) **FASCICULE DE BREVET EUROPEEN**

(45) Date de publication et mention de la délivrance du brevet:
**23.01.2019 Bulletin 2019/04**

(51) Int Cl.:
*H04W 56/00* (2009.01)  *H04W 84/18* (2009.01)

(21) Numéro de dépôt: **16713530.0**

(22) Date de dépôt: **25.02.2016**

(86) Numéro de dépôt international:
**PCT/FR2016/050441**

(87) Numéro de publication internationale:
**WO 2016/139408 (09.09.2016 Gazette 2016/36)**

(54) **PROCÉDÉS D'ÉMISSION DE DONNÉES ENTRE UN TERMINAL ET UN RÉSEAU D'ACCÈS SYNCHRONISÉ EN FRÉQUENCES SUR UN MESSAGE MONTANT DUDIT TERMINAL**

VERFAHREN ZUR ÜBERTRAGUNG VON DATEN ZWISCHEN EINEM ENDGERÄT UND EINEM FREQUENZSYNCHRONISIERTEN ZUGANGSNETZWERK AUF EINER UPLINK-NACHRICHT VON BESAGTEM ENDGERÄT

METHODS FOR TRANSMITTING DATA BETWEEN A TERMINAL AND A FREQUENCY-SYNCHRONISED ACCESS NETWORK ON AN UPLINK MESSAGE FROM SAID TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2015 FR 1551783**

(43) Date de publication de la demande:
**10.01.2018 Bulletin 2018/02**

(73) Titulaire: **SIGFOX**
**31670 Labège (FR)**

(72) Inventeurs:
• **ZIRPHILE, Lionel**
  **31520 Ramonville Saint Agne (FR)**
• **CHALBOS, Nicolas**
  **31600 Eaunes (FR)**
• **FOURTET, Christophe**
  **82170 Pompignan (FR)**

(74) Mandataire: **Ipside**
  **6, Impasse Michel Labrousse**
  **31100 Toulouse (FR)**

(56) Documents cités:
**EP-A1- 2 790 334    US-A- 6 130 914**

EP 3 266 256 B1

**Description**

**DOMAINE TECHNIQUE**

La présente invention appartient au domaine des télécommunications numériques, et concerne plus particulièrement des procédés d'émission de données entre des terminaux et un réseau d'accès d'un système de communication sans fil.

**ÉTAT DE LA TECHNIQUE**

La présente invention trouve une application particulièrement avantageuse, bien que nullement limitative, dans les systèmes de communication sans fil à bande ultra étroite. Par « bande ultra étroite » (« Ultra Narrow Band » ou UNB dans la littérature anglo-saxonne), on entend que le spectre fréquentiel instantané des signaux radioélectriques émis par les terminaux est de largeur fréquentielle inférieure à un kilohertz.

De tels systèmes de communication sans fil UNB sont particulièrement adaptés pour des applications du type M2M (acronyme anglo-saxon pour « Machine-to-Machine ») ou du type « Internet des objets » (« Internet of Things » ou IoT dans la littérature anglo-saxonne).

Dans un tel système de communication sans fil UNB, les échanges de données sont essentiellement monodirectionnels, en l'occurrence sur un lien montant entre des terminaux et un réseau d'accès dudit système.

Les terminaux émettent des messages montants qui sont collectés par des stations de base du réseau d'accès, sans avoir à s'associer préalablement à une ou plusieurs stations de base du réseau d'accès. En d'autres termes, les messages montants émis par un terminal ne sont pas destinés à une station de base spécifique du réseau d'accès, et le terminal émet ses messages montants en supposant qu'ils pourront être reçus par au moins une station de base. De telles dispositions sont avantageuses en ce que le terminal n'a pas besoin de réaliser des mesures régulières, gourmandes notamment d'un point de vue consommation électrique, pour déterminer la station de base la plus appropriée pour recevoir ses messages montants. La complexité repose sur le réseau d'accès, qui doit être capable de recevoir des messages montants pouvant être émis à des instants arbitraires, et sur des fréquences centrales arbitraires à l'intérieur d'une bande fréquentielle de multiplexage des différents terminaux.

Un tel mode de fonctionnement, dans lequel les échanges de données sont essentiellement monodirectionnels, est tout à fait satisfaisant pour de nombreuses applications, comme par exemple la télé-relève de compteurs de gaz, d'eau, d'électricité, la télésurveillance de bâtiments ou de maisons, etc.

Dans certaines applications cependant, il peut être avantageux de pouvoir également effectuer des échanges de données dans l'autre direction, à savoir sur un lien descendant du réseau d'accès vers les terminaux, par exemple pour reconfigurer un terminal et/ou commander un actionneur relié audit terminal. Toutefois, il est nécessaire d'offrir une telle capacité en limitant la complexité des terminaux.

Le brevet US 6130914 décrit un exemple de système de communication sans fil UNB bidirectionnel permettant de limiter la complexité des terminaux. En effet, dans le brevet US 6130914, la fréquence centrale sur laquelle le réseau d'accès émet un message descendant à destination d'un terminal, en réponse à un message montant émis par ledit terminal, est déterminée par ledit réseau d'accès à partir de la fréquence centrale sur laquelle ledit message montant a été reçu.

Ainsi, la précision sur la génération de la fréquence centrale du message montant, côté terminal, peut être faible et réalisée par des moyens de synthèse fréquentielle peu coûteux. En effet, le réseau d'accès ne sait pas a priori sur quelle fréquence centrale est émis le message montant, et doit par défaut écouter le lien montant sur toute la bande fréquentielle de multiplexage pour détecter ce message montant. La fréquence centrale du message montant détecté est estimée par le réseau d'accès, et le terminal et le réseau d'accès disposent alors sensiblement de la même fréquence de référence, en l'occurrence la fréquence centrale du message montant, pour générer la fréquence centrale du message descendant. En d'autres termes, le terminal et le réseau d'accès sont alors sensiblement synchronisés en fréquences, et ce quelle que soit la précision des moyens de synthèse fréquentielle du terminal, puisque c'est le réseau d'accès qui se synchronise en fréquences avec ledit terminal, et non l'inverse.

En outre, puisque le terminal sait, à partir de la fréquence centrale du message montant qu'il a lui-même émis, déterminer la fréquence centrale sur laquelle le message descendant va être émis, il peut écouter le lien descendant uniquement autour de ladite fréquence centrale prédéterminée du message descendant, sur une bande fréquentielle de largeur de l'ordre de la largeur spectrale instantanée du message descendant, très inférieure à la largeur de la bande fréquentielle de multiplexage.

Contrairement au réseau d'accès, le terminal ne doit donc pas écouter toute la bande fréquentielle de multiplexage. De plus, étant donné que le message descendant est émis en réponse à un message montant émis par le terminal, celui-ci ne doit pas écouter en permanence le lien descendant, mais uniquement après avoir émis un message montant.

Un problème survient toutefois lorsque des interférences sont présentes dans la bande fréquentielle de multiplexage.

En effet, si le terminal sélectionne la fréquence centrale du message montant sans vérifier la disponibilité de celle-ci, ce qui est avantageux pour dispenser ledit terminal d'effectuer des mesures régulières sur le lien montant, alors le message montant peut être manqué par le réseau d'accès. En outre, le réseau d'accès n'émet pas de message descendant et le terminal écoute malgré tout le lien descendant dans l'attente d'un message descendant.

## EXPOSÉ DE L'INVENTION

La présente invention a pour objectif de remédier à tout ou partie des limitations des solutions de l'art antérieur, notamment celles exposées ci-avant, en proposant une solution qui permette d'avoir une meilleure protection contre les interférences tout en limitant les besoins d'écoute du lien descendant, par le terminal, dans l'attente d'un message descendant.

A cet effet, et selon un premier aspect, l'invention concerne un procédé d'émission, par un terminal d'un système de communication sans fil, de messages montants sur un lien montant à destination d'un réseau d'accès, ledit procédé comportant des étapes, mises en oeuvre par ledit terminal, de :

- formation d'une séquence de $N_R$ messages montants, chaque message montant de la séquence comportant un même paquet de données utiles et des données de contrôle, lesdites données de contrôle comportant un identifiant du message montant parmi les $N_R$ messages montants de la séquence,
- émission des messages montants de la séquence sur des fréquences centrales respectives différentes,

ledit terminal étant configuré pour recevoir un message descendant, émis en réponse à la séquence de messages montants, sur une fréquence centrale présentant des écarts fréquentiels respectifs prédéfinis par rapport aux fréquences centrales des messages montants de la séquence.

Ainsi, les messages montants de la séquence comportent tous le même paquet de données utiles. Ce paquet de données utiles est donc émis $N_R$ fois sur le lien montant. En outre, les $N_R$ messages montants de la séquence sont émis sur des fréquences centrales respectives différentes. Ainsi, même en présence d'interférences dans une partie de la bande fréquentielle de multiplexage, le réseau d'accès pourra généralement détecter au moins l'un des $N_R$ messages montants de la séquence, émis sur une fréquence centrale peu perturbée par lesdites interférences, et extraire ledit paquet de données utiles. La probabilité de manquer le paquet de données utiles est donc réduite grâce à la diversité fréquentielle introduite par l'émission dudit paquet de données utiles dans plusieurs messages montants, sur des fréquences centrales respectives différentes.

Toutefois, étant donné que les messages montants de la séquence sont émis sur plusieurs fréquences centrales différentes, il n'est pas possible pour le réseau d'accès, sans prévoir d'autres moyens, de savoir quelle fréquence centrale doit être utilisée comme fréquence de référence pour déterminer la fréquence centrale sur laquelle doit être émis le message descendant. Ceci est d'autant plus vrai que tous les messages montants de la séquence ne sont pas nécessairement reçus par le réseau d'accès.

A cet effet, les messages montants de la séquence comportent des identifiants respectifs permettant de distinguer les $N_R$ messages montants de la séquence entre eux. En outre, la fréquence centrale du message descendant présente des écarts fréquentiels respectifs prédéfinis par rapport aux fréquences centrales sur lesquelles sont émis les $N_R$ messages montants de la séquence. Les fréquences centrales des messages montants de la séquence ne sont pas connues a priori du réseau d'accès, par contre les écarts fréquentiels prédéfinis sont connus a priori du réseau d'accès ou peuvent être déterminés par ledit réseau d'accès. Lesdits écarts fréquentiels prédéfinis sont associés respectivement aux différents identifiants des $N_R$ messages montants de sorte qu'il est possible de retrouver, à partir de l'identifiant d'un message montant de la séquence, l'écart fréquentiel entre la fréquence centrale de ce message montant et la fréquence centrale sur laquelle doit être émis le message descendant.

Ainsi, lorsqu'il reçoit un message montant quelconque de la séquence, le réseau d'accès peut en mesurer la fréquence centrale, en extraire l'identifiant, retrouver l'écart fréquentiel associé audit identifiant extrait et estimer en fonction dudit écart fréquentiel la fréquence centrale sur laquelle doit être émis le message descendant. Par conséquent, le réseau d'accès peut estimer sans ambiguïté la fréquence centrale sur laquelle doit être émis le message descendant, et ce quel que soit le message montant de la séquence qu'il a reçu, y compris si des messages montants ont été manqués, par exemple du fait d'interférences dans la bande fréquentielle de multiplexage.

Dans des modes particuliers de mise en oeuvre, le procédé d'émission sur le lien montant peut comporter en outre l'une ou plusieurs des caractéristiques suivantes, prises isolément ou selon toutes les combinaisons techniquement possibles.

Dans des modes particuliers de mise en oeuvre, les identifiants des messages montants de la séquence correspondent respectivement à des motifs de synchronisation prédéfinis différents.

De telles dispositions sont avantageuses en ce que l'ajout de l'identifiant dans un message montant de la séquence n'augmente pas la quantité de données de contrôle incluses dans ce message montant. En effet, le motif de synchronisation, inclus pour synchroniser le réseau d'accès avec ledit message montant, est alors utilisé en outre pour encoder l'identifiant du message montant au sein de la séquence, c'est-à-dire pour distinguer entre eux les $N_R$ messages montants de la séquence. Pour ce faire, $N_R$ motifs de synchronisation différents sont considérés, associés respectivement aux différents messages montants de la séquence. La quantité de données de contrôle d'un motif de synchronisation n'est pas augmentée par rapport au cas où un seul motif de synchronisation est utilisé. Par contre le réseau d'accès doit à présent comparer chaque message montant détecté à plusieurs motifs de synchronisation, afin de réaliser simultanément la synchronisation et l'extraction de l'identifiant du message montant détecté.

Dans des modes particuliers de mise en oeuvre, les messages montants de la séquence sont émis successivement sans recouvrement temporel entre eux.

Selon un second aspect, la présente invention concerne un terminal comportant des moyens configurés pour mettre en oeuvre un procédé d'émission sur un lien montant selon l'un quelconque des modes de mise en oeuvre de l'invention.

Selon un troisième aspect, la présente invention concerne un procédé d'émission, par un réseau d'accès d'un système de communication sans fil, d'un message descendant sur un lien descendant à destination d'un terminal en réponse à une séquence de messages montants émis par ledit terminal conformément à un procédé d'émission sur le lien montant selon l'un quelconque des modes de mise en oeuvre de l'invention. Le procédé d'émission sur le lien descendant comporte une étape de recherche de messages montants sur le lien montant et, lorsqu'un message montant est détecté, des étapes de :

- mesure de la fréquence centrale du message montant détecté,
- extraction de l'identifiant du message montant détecté,
- estimation de la fréquence centrale sur laquelle doit être émis le message descendant en fonction de la mesure de la fréquence centrale et de l'identifiant extrait dudit message montant détecté,
- émission du message descendant sur la fréquence centrale estimée.

Dans des modes particuliers de mise en oeuvre, le procédé d'émission sur le lien descendant peut comporter en outre l'une ou plusieurs des caractéristiques suivantes, prises isolément ou selon toutes les combinaisons techniquement possibles.

Dans des modes particuliers de mise en oeuvre, l'extraction de l'identifiant du message montant détecté comporte la comparaison dudit message montant détecté avec différents motifs de synchronisation prédéfinis, associés respectivement aux différents identifiants des messages montants de la séquence.

Dans des modes particuliers de mise en oeuvre, l'étape d'estimation de la fréquence centrale du message descendant comporte des étapes de :

- estimation d'une fréquence de référence en fonction de la mesure de la fréquence centrale du message montant détecté et d'un écart fréquentiel prédéfini, associé à l'identifiant extrait, entre la fréquence de référence et la fréquence centrale du message montant détecté,
- estimation de la fréquence centrale du message descendant en fonction de la fréquence de référence estimée.

Dans des modes particuliers de mise en oeuvre, la fréquence centrale du message descendant est déterminée en fonction de l'écart fréquentiel prédéfini, associé à l'identifiant extrait, entre la fréquence centrale du message montant détecté et la fréquence centrale sur laquelle doit être émis le message descendant.

Selon un quatrième aspect, la présente invention concerne une station de base comportant des moyens configurés pour mettre en oeuvre un procédé d'émission sur un lien descendant selon l'un quelconque des modes de mise en oeuvre de l'invention.

Selon un cinquième aspect, la présente invention concerne un réseau d'accès comportant des moyens configurés pour mettre en oeuvre un procédé d'émission sur un lien descendant selon l'un quelconque des modes de mise en oeuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un système de communication sans fil,
- Figure 2 : un diagramme illustrant les principales étapes d'un procédé d'émission sur un lien montant,
- Figure 3 : un diagramme illustrant les principales étapes d'un procédé d'émission sur un lien descendant.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

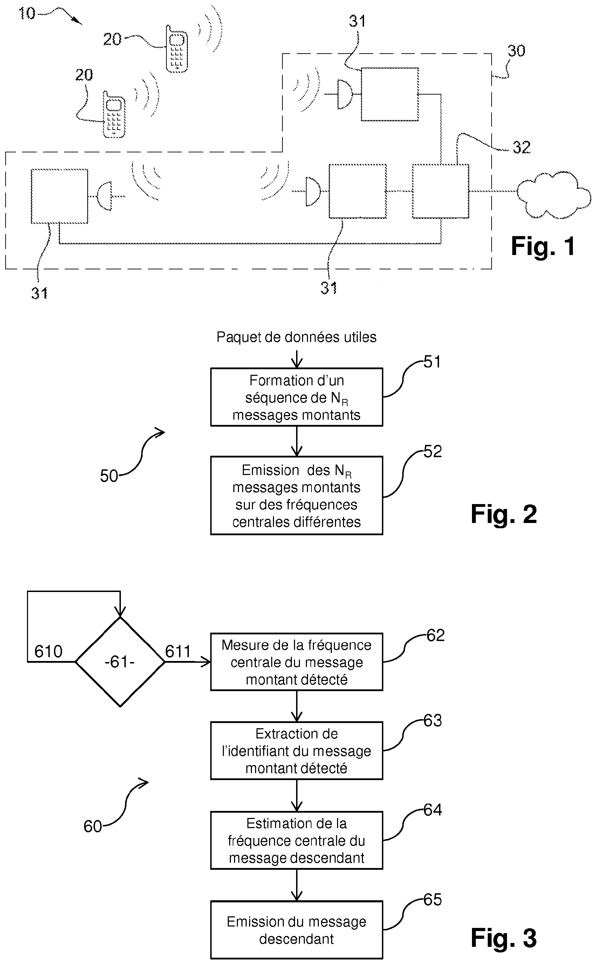

La figure 1 représente schématiquement un système 10 de communication sans fil, par exemple de type UNB, comportant plusieurs terminaux 20 et un réseau d'accès 30 comportant plusieurs stations de base 31.

Les terminaux 20 et les stations de base 31 du réseau d'accès 30 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les terminaux 20 sont adaptés à émettre des messages montants sur un lien montant à destination du réseau d'accès 30. Les messages montants sont par exemple émis de façon asynchrone. Par « émettre de façon asynchrone », on entend que les terminaux 20 déterminent de manière autonome quand ils émettent et/ou sur quelle fréquence centrale ils émettent, sans coordination desdits terminaux 20 entre eux et avec les stations de base 31 du réseau d'accès 30.

Dans la suite de la description, on se place de manière non limitative dans le cas où les terminaux 20 sont au moins asynchrones en fréquences, de sorte que les messages montants sont émis sur des fréquences centrales non connues a priori du réseau d'accès 30.

Chaque station de base 31 est adaptée à recevoir les messages montants des terminaux 20 qui se trouvent à sa portée. Chaque message montant ainsi reçu est par exemple transmis à un serveur 32 du réseau d'accès 30, éventuellement accompagné d'autres informations comme un identifiant de la station de base 31 qui l'a reçu, la puissance mesurée dudit message montant reçu, la date de réception dudit message montant, la fréquence centrale mesurée dudit message montant reçu, etc. Le serveur 32 traite par exemple l'ensemble des messages montants reçus des différentes stations de base 31.

En outre, le réseau d'accès 30 est également adapté à émettre, par l'intermédiaire des stations de base 31, des messages descendants sur un lien descendant à destination des terminaux 20, lesquels sont adaptés à les recevoir. Les messages descendants sont par exemple émis à l'initiative du réseau d'accès 30. Dans un tel cas, les terminaux 20 doivent en permanence écouter le lien descendant, dans l'attente d'un éventuel message descendant.

Dans la suite de la suite de la description, on se place de manière non limitative dans le cas où le réseau d'accès 30 émet des messages descendants en réponse à des messages montants émis par des terminaux 20, de sorte que les terminaux 20 ne doivent en principe écouter le lien descendant, dans l'attente d'un message descendant, qu'après avoir émis un ou plusieurs messages montants à destination du réseau d'accès 30.

## A) Procédé d'émission sur le lien montant

La figure 2 représente schématiquement les principales étapes d'un procédé 50 d'émission, par un terminal 20, de paquets de données utiles sur le lien montant à destination du réseau d'accès 30.

Par exemple, le terminal 20 comporte un module de traitement (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 50 d'émission sur le lien montant. Dans une variante, le module de traitement comporte un ou des circuits logiques programmables, de type FPGA, PLD, etc., et/ou circuits intégrés spécialisés (ASIC) adaptés à mettre en oeuvre tout ou partie desdites étapes du procédé 50 d'émission sur le lien montant. Chaque terminal 20 comporte en outre des moyens de communication sans fil, considérés comme connus de l'homme de l'art, permettant audit terminal d'émettre des messages montants et de recevoir des messages descendants sous la forme de signaux radioélectriques.

En d'autres termes, le terminal 20 comporte un ensemble de moyens configurés de façon logicielle (produit programme d'ordinateur spécifique) et/ou matérielle (FPGA, PLD, ASIC, etc.) pour mettre en oeuvre les différentes étapes du procédé 50 d'émission sur le lien montant.

Tel qu'illustré par la figure 2, le procédé 50 d'émission sur le lien montant comporte principalement les étapes suivantes, qui seront décrites plus en détail ci-après :

- 51 formation d'une séquence de $N_R$ messages montants à partir d'un même paquet de données utiles,
- 52 émission des messages montants de la séquence sur des fréquences centrales respectives différentes.

Il est à noter que l'ordre des étapes illustré par la figure 2 n'est pas limitatif, à l'exception qu'un message montant de la séquence, pour être effectivement émis, doit au préalable avoir été formé. Par exemple, si les messages montants de la séquence sont émis successivement, il est possible :

- de former d'abord le premier message montant de la séquence (étape 51) et de l'émettre sur le lien montant (étape 52),
- de former ensuite le second message montant de la séquence (étape 51) et de l'émettre sur le lien montant (étape 52), etc.

A.1) Formation de la séquence de $N_R$ messages montants

Au cours de l'étape 51 de formation de la séquence de messages montants, $N_R$ messages montants sont formés à partir d'un même paquet de données utiles. En d'autres termes, tous les $N_R$ messages montants de la séquence comportent le même paquet de données utiles, de sorte qu'il suffit que l'un des messages montants de la séquence soit reçu par le réseau d'accès 30 pour que ledit paquet de données puisse être extrait.

Le nombre $N_R$ de messages montants de la séquence, c'est-à-dire le nombre de répliques du même paquet de données utiles émis sur le lien montant, est égal ou supérieur à deux. Dans la suite de la description, on se place de manière non limitative dans le cas où le nombre $N_R$ est égal à trois, de sorte que la séquence comporte trois messages montants respectivement M1, M2 et M3, comportant le même paquet de données utiles.

Il est à noter que, bien que le même paquet de données utiles soit émis dans chaque message montant de la séquence, des traitements différents peuvent être appliqués, sur ledit paquet de données utiles, d'un message montant de la séquence à un autre. Par exemple, il est possible d'appliquer, sur le paquet de données utiles, un codage de canal différent d'un message montant à un autre de la séquence. Par exemple, le même code correcteur d'erreurs peut être appliqué sur le paquet de données utiles, et les données utiles encodées peuvent être poinçonnées de sorte à obtenir un même taux de codage pour tous les messages montants de la séquence, mais en considérant un motif de poinçonnage différent d'un message montant à un autre. Par exemple, dans le cas où les données utiles encodées comportent le paquet de données utiles et des bits de parité ajoutés par le code correcteur d'erreurs, le poinçonnage peut ne concerner que les bits de parité, de sorte que les bits de parité transmis varient d'un message montant à un autre de la séquence. De telles dispositions permettent en effet, lorsque plusieurs messages montants de la séquence sont reçus par le réseau d'accès 30, d'améliorer la robustesse du décodage correcteur d'erreurs en exploitant davantage de redondance.

Si les traitements appliqués sur le paquet de données utiles peuvent varier d'un message montant à un autre de la séquence, le paquet de données utiles doit pouvoir être extrait par le réseau d'accès 30 à partir de l'un quelconque des messages montants M1, M2, M3 de la séquence.

Chaque message montant M1, M2, M3 de la séquence comporte, outre ledit paquet de données utiles, des données de contrôle. Selon l'invention, lesdites données de contrôle de chaque message montant de la séquence comportent un identifiant du message montant permettant de distinguer les $N_R$ messages montants de la séquence entre eux.

Par exemple, l'identifiant peut se présenter sous la forme d'un compteur des messages montants de la séquence, qui est inséré dans le message montant en plus des autres données de contrôle. Par exemple, pour le message montant M1 de la séquence, le compteur inséré est égal à 1, pour le message montant M2 de la séquence, le compteur inséré est égal à 2, et pour le message montant M3 de la séquence, le compteur inséré est égal à 3.

Si un tel compteur peut être encodé avec un nombre réduit de bits additionnels (deux bits suffisent dans le cas où $N_R$ est égal à trois), il est souhaitable, en particulier pour des applications bas débit telles que la plupart des applications M2M ou IoT, de réduire au maximum la quantité de données de contrôle dans les messages montants.

A cet effet, dans des modes préférés de mise en oeuvre, les identifiants des messages montants de la séquence correspondent à des motifs de synchronisation prédéfinis différents.

En effet, il est connu d'insérer, dans un message montant, un motif de synchronisation temporelle et/ou fréquentielle qui est utilisé par le réseau d'accès 30 pour estimer l'instant de début du message montant et/ou pour estimer précisément la fréquence centrale dudit message montant. Avantageusement, plutôt que d'utiliser le même motif de synchronisation pour tous les messages montants de la séquence, $N_R$ motifs de synchronisation différents sont considérés, associés respectivement aux différents messages montants de la séquence. Les $N_R$ motifs de synchronisation différents sont par exemple mémorisés dans une mémoire non volatile du terminal 20. Par conséquent, pour le message montant M1 de la séquence, le terminal 20 insère le motif de synchronisation d'indice 1, pour le message montant M2 de la séquence, le terminal 20 insère le motif de synchronisation d'indice 2, etc.

Le motif de synchronisation étant différent d'un message montant de la séquence à un autre, le réseau d'accès 30 peut distinguer les $N_R$ messages montants de la séquence en analysant le motif de synchronisation de chaque message montant détecté. Etant donné que le motif de synchronisation est utilisé à la fois pour la synchronisation et pour distinguer les $N_R$ messages montants de la séquence entre eux, la quantité de données de contrôle insérée dans chaque message montant n'est pas augmentée par rapport au cas où un seul motif de synchronisation est utilisé.

A.2) Emission des messages montants de la séquence

Au cours de l'étape 52 d'émission, les messages montants M1, M2, M3 de la séquence sont émis sur des fréquences centrales respectives F1, F2 et F3 différentes à l'intérieur d'une bande fréquentielle de multiplexage des différents terminaux 20.

En outre, le terminal 20 est configuré pour recevoir un message descendant, émis en réponse à la séquence de $N_R$ messages montants M1, M2, M3, sur une fréquence centrale $F_D$ présentant des écarts fréquentiels respectifs $\Delta F_D[1]$, $\Delta F_D[2]$, $\Delta F_D[3]$ prédéfinis par rapport aux fréquences centrales F1, F2 et F3. En d'autres termes, la fréquence centrale $F_D$ sur laquelle doit être émis le message descendant, et les fréquences centrales F1, F2, F3 vérifient les expressions suivantes :

$$F_D = F1 + \Delta F_D[1]$$

$$F_D = F2 + \Delta F_D[2]$$

$$F_D = F3 + \Delta F_D[3]$$

Ainsi, le terminal 20 sait a priori sur quelle fréquence centrale $F_D$ il doit recevoir le message descendant émis en réponse à la séquence de $N_R$ messages montants M1, M2, M3. Du fait que le terminal 20 ne doit recevoir, après avoir émis ladite séquence de $N_R$ messages montants, un ou des messages descendants que sur une seule fréquence centrale, en l'occurrence la fréquence centrale $F_D$, ledit terminal 20 ne doit donc pas écouter le lien descendant sur toute la bande fréquentielle de multiplexage, mais uniquement sur une bande fréquentielle de largeur réduite autour de ladite fréquence centrale $F_D$. La largeur de ladite bande fréquentielle sur laquelle le terminal 20 écoute le lien descendant est par exemple de l'ordre de la largeur spectrale instantanée du message descendant, par exemple deux fois supérieure à ladite largeur spectrale instantanée dudit message descendant (pour tenir compte d'une imprécision sur la synthèse de la fréquence centrale, de la dérive fréquentielle des moyens de synthèse fréquentielle, d'un éventuel effet Doppler, etc.). Du fait que le terminal 20 n'écoute le lien descendant que sur une bande fréquentielle de largeur limitée, la complexité des traitements associés à la recherche du message descendant sur le lien descendant est grandement réduite. En outre, le nombre de messages descendants susceptibles d'être détectés par ledit terminal 20, y compris des messages descendants qui ne lui sont pas destinés, est fortement réduit par rapport au cas où le terminal 20 pourrait recevoir des messages descendants sur n'importe quelle fréquence centrale du lien descendant.

Les écarts fréquentiels $\Delta F_D[1]$, $\Delta F_D[2]$, $\Delta F_D[3]$, et les messages montants M1, M2, M3 de la séquence auxquels ils s'appliquent, sont connus a priori du réseau d'accès 30, ou peuvent être déterminés par ledit réseau d'accès 30. Par conséquent, étant donné que le réseau d'accès 30 peut, grâce aux identifiants, distinguer les messages montants M1, M2, M3 de la séquence entre eux, le réseau d'accès 30 peut également retrouver l'écart fréquentiel prédéfini associé à tout message montant détecté de la séquence, et estimer la fréquence centrale $F_D$ à partir d'une mesure de la fréquence centrale dudit message montant détecté.

Pour générer les fréquences centrales F1, F2 et F3, le terminal 20 peut par exemple utiliser une fréquence de référence $F_R$. La fréquence de référence $F_R$ est par exemple sélectionnée à l'intérieur de la bande fréquentielle de multiplexage, de préférence de manière sensiblement aléatoire au moyen d'un générateur pseudo-aléatoire.

Les fréquences centrales F1, F2 et F3 peuvent être générées au moyen d'écarts fréquentiels respectifs $\Delta F1$, $\Delta F2$ et $\Delta F3$ prédéfinis par rapport à la fréquence de référence $F_R$. En d'autres termes, les fréquences centrales F1, F2, F3 et la fréquence de référence $F_R$ vérifient les expressions suivantes :

$$F1 = F_R + \Delta F1$$

$$F2 = F_R + \Delta F2$$

$$F3 = F_R + \Delta F3$$

Par exemple, la fréquence de référence $F_R$ peut être considérée comme étant la fréquence centrale F1, auquel cas l'écart fréquentiel $\Delta F1$ est nul. La fréquence centrale F2 est alors égale à $(F1 + \Delta F2)$ et la fréquence centrale F3 est alors égale à $(F1 + \Delta F3)$. Suivant un autre exemple, la fréquence de référence $F_R$ correspond à la fréquence centrale $F_D$ sur laquelle doit être émis le message descendant, auquel cas :

$$\Delta F1 = - \Delta F_D[1]$$

$$\Delta F2 = - \Delta F_D[2]$$

$$\Delta F3 = - \Delta F_D[3]$$

Il est à noter que, bien que les fréquences centrales F1, F2 et F3 présentent des écarts fréquentiels respectifs $\Delta F1$, $\Delta F2$ et $\Delta F3$ prédéfinis par rapport à la fréquence de référence $F_R$, elles ne sont pas nécessairement toutes générées à partir de ladite fréquence de référence $F_R$. Par exemple, il est possible de générer la fréquence centrale F1 directement à partir de la fréquence de référence $F_R$, puis de générer la fréquence centrale F2 à partir de la fréquence centrale F1 en appliquant un saut de fréquences $\Delta F2'$ égal à $(\Delta F2 - \Delta F1)$, puis de générer la fréquence centrale F3 à partir de la fréquence centrale F2 en appliquant un saut de fréquences $\Delta F3'$ égal à $(\Delta F3 - \Delta F2)$.

Pour un système de communication sans fil de type UNB, il est possible de considérer des écarts fréquentiels de l'ordre de quelques kilohertz (kHz) à quelques dizaines de kilohertz. Par exemple, les fréquences centrales F1, F2 et F3 peuvent être espacées de 20 kHz. Par exemple, si l'on considère que l'écart fréquentiel $\Delta F1$ est nul, il est possible de considérer un écart fréquentiel $\Delta F2$ égal à 20 kHz et un écart fréquentiel $\Delta F3$ égal à -20 kHz, ou encore un écart fréquentiel $\Delta F2$ égal à 20 kHz et un écart fréquentiel $\Delta F3$ égal à 40 kHz, etc.

Les écarts fréquentiels $\Delta F1$, $\Delta F2$, $\Delta F3$ et les écarts fréquentiels $\Delta F_D[1]$, $\Delta F_D[2]$, $\Delta F_D[3]$ sont reliés entre eux par les expressions suivantes :

$$\Delta F_D[1] = \Delta F_D - \Delta F1$$

$$\Delta F_D[2] = \Delta F_D - \Delta F2$$

$$\Delta F_D[3] = \Delta F_D - \Delta F3$$

expression dans laquelle $\Delta F_D$ correspond à un écart fréquentiel prédéfini entre la fréquence centrale $F_D$ et la fréquence de référence $F_R$ ($\Delta F_D = F_D - F_R$).

Dans des modes préférés de mise en oeuvre, les $N_R$ messages montants de la séquence sont émis successivement, sans recouvrement temporel entre eux. De telles dispositions permettent également de réduire la complexité des traitements à effectuer par le terminal 20 pour l'émission de la séquence de $N_R$ messages montants. En effet, si les $N_R$ messages montants de la séquence étaient émis simultanément, alors le terminal 20 devrait travailler avec une fréquence d'échantillonnage plus élevée pour générer en bande de base des messages montants M1, M2, M3 espacés en fréquences par les écarts fréquentiels $\Delta F2'$ et $\Delta F3'$ et/ou les moyens de communication sans fil du terminal 20 devraient disposer de chaînes analogiques d'émission plus complexes pour translater simultanément les messages montants M1, M2, M3 sur des fréquences centrales respectives différentes.

Rien n'exclut cependant, suivant d'autres exemples, d'avoir tout ou partie des messages montants de la séquence émis avec un recouvrement temporel non nul, par exemple émis simultanément.

B) Procédé d'émission sur le lien descendant

La figure 3 représente schématiquement les principales étapes d'un procédé 60 d'émission, par le réseau d'accès 30, d'un message descendant sur le lien descendant à destination d'un terminal 20, en réponse à une séquence de messages montants émis par ledit terminal 20 conformément à un procédé 50 d'émission sur le lien montant.

Tel qu'illustré par la figure 3, le procédé 60 d'émission sur le lien descendant comporte tout d'abord une étape 61 de recherche de messages montants sur le lien montant. La recherche de messages montants sur le lien montant se poursuit tant qu'aucun message montant n'a été détecté (référence 610 sur la figure 3).

Lorsqu'un message montant est détecté (référence 611 sur la figure 3), le procédé 60 d'émission comporte alors des étapes de :

- 62 mesure de la fréquence centrale du message montant détecté,
- 63 extraction de l'identifiant du message montant détecté,
- 64 estimation de la fréquence centrale sur laquelle doit être émis le message descendant en fonction de la mesure de la fréquence centrale et de l'identifiant extrait dudit message montant détecté,
- 65 émission du message descendant sur la fréquence centrale estimée.

Il est à noter que l'ordre des étapes 62 de mesure et 63 d'extraction de l'identifiant est indifférent.

En outre, s'il est déterminé que plusieurs messages montants détectés appartiennent à une même séquence de messages montants émis par un même terminal 20 (par exemple en utilisant des données de contrôle spécifiques, comme par exemple un identifiant du paquet de données utiles émis dans cette séquence ainsi qu'un identifiant du terminal 20 ayant émis ladite séquence de messages montants), alors il n'est pas nécessaire d'exécuter les étapes du procédé 60 d'émission sur le lien descendant pour chaque message montant de la séquence détecté. En particulier, la fréquence centrale $F_D$ sur laquelle doit être émis le message descendant est de préférence estimée une seule fois. Si un seul message descendant doit être émis en réponse à la séquence de messages montants, l'étape 65 d'émission est exécutée une seule fois. Si plusieurs messages descendants doivent être émis en réponse à ladite séquence de messages montants, ils sont de préférence tous émis sur la même fréquence centrale.

Par exemple, dans le cas où les messages montants de la séquence sont émis successivement, sans recouvrement temporel, il peut être avantageux de ne mesurer que la fréquence centrale du dernier message montant détecté de la séquence, ou du moins de n'utiliser que la fréquence centrale mesurée pour ledit dernier message montant détecté pour estimer la fréquence centrale sur laquelle doit être émis le message descendant.

Parmi les différentes étapes illustrées par la figure 3, seule l'étape 65 d'émission du message descendant doit nécessairement être exécutée au moins partiellement par une station de base 31. Les autres étapes illustrées par la figure 3 peuvent être exécutées par une station de base 31 et/ou par le serveur 32 du réseau d'accès 30. En particulier, toutes les étapes illustrées par la figure 2 peuvent être exécutées par la station de base 31 utilisée pour émettre le message descendant sur le lien descendant.

Dans la suite de la description, on se place de manière non limitative dans le cas où les étapes 61 de recherche et 62 de mesure sont exécutées par une station de base 31, qui transmet alors le message montant détecté et la mesure de la fréquence centrale au serveur 32. Le serveur 32 extrait ensuite (étape 63), l'identifiant du message montant détecté, et estime (étape 64) la fréquence centrale sur laquelle le message descendant doit être émis. Le serveur 32 forme également le message descendant, éventuellement après avoir extrait le paquet de données utiles du message montant détecté, et transmet ledit message descendant et la fréquence centrale estimée dudit message descendant à une station de base 31 dans la couverture de laquelle se trouve le terminal 20.

Les stations de base 31 et le serveur 32 comportent par exemple des modules de traitement respectifs (non représentés sur les figures), chaque module de traitement comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 60 d'émission sur le lien descendant. Dans une variante, chaque module de traitement comporte un ou des circuits logiques programmables, de type FPGA, PLD, etc., et/ou circuits intégrés spécialisés (ASIC) adaptés à mettre en oeuvre tout ou partie desdites étapes du procédé 60 d'émission sur le lien descendant.

Chaque station de base 31 comporte en outre des moyens de communication sans fil, considérés comme connus de l'homme de l'art, permettant à ladite station de base de recevoir des messages montants et d'émettre des messages descendants sous la forme de signaux radioélectriques. Les stations de base 31 et le serveur 32 comportent également des moyens de communication de réseau respectifs, considérés comme connus de l'homme de l'art, permettant au serveur 32 d'échanger des données avec chaque station de base 31.

En d'autres termes, le réseau d'accès 30 comporte un ensemble de moyens configurés de façon logicielle (produit programme d'ordinateur spécifique) et/ou matérielle (FPGA, PLD, ASIC, etc.) pour mettre en oeuvre les différentes étapes du procédé 60 d'émission sur le lien descendant.

On décrit à présent des exemples non limitatifs de mise en oeuvre des différentes étapes du procédé 60 d'émission sur le lien descendant.

B.1) Recherche de messages montants et mesure de fréquence centrale

L'étape 61 de recherche de messages montants sur le lien montant est considérée comme connue de l'homme de l'art, et comporte par exemple un calcul d'un spectre fréquentiel dans la bande fréquentielle de multiplexage, et la recherche de maxima locaux dans ledit spectre fréquentiel supérieurs à une valeur seuil de détection prédéfinie.

Lorsqu'un message montant est détecté, l'étape 62 de mesure de la fréquence centrale du message montant détecté consiste par exemple à obtenir la fréquence associée au maximum local du spectre fréquentiel ayant conduit à la détection dudit message montant.

B.2) Extraction de l'identifiant

Au cours de l'étape 63 d'extraction, l'identifiant du message montant détecté, permettant de distinguer les $N_R$ messages montants de la séquence entre eux, est extrait du message montant détecté. L'extraction dudit identifiant dépend de la manière dont il a été incorporé dans le message montant, et est considérée comme étant à la portée de l'homme de l'art.

Dans le cas, décrit précédemment, où des motifs de synchronisation différents sont utilisés pour distinguer les $N_R$ messages montants de la séquence, alors l'extraction de l'identifiant du message montant détecté comporte par exemple la comparaison dudit message montant détecté avec les différents motifs de synchronisation, par exemple préalablement mémorisés dans une mémoire non volatile du réseau d'accès 30. Cette comparaison vise à mesurer la ressemblance entre le message montant détecté et chaque motif de synchronisation possible, par exemple par corrélation. L'identifiant extrait correspond à celui associé au motif de synchronisation permettant d'optimiser la ressemblance avec le message montant détecté.

A l'issue de l'étape 63 d'extraction, on sait donc quel message montant, parmi les $N_R$ messages montants de la séquence, a été détecté.

B.3) Estimation de la fréquence centrale du message descendant

Tel qu'indiqué précédemment, les $N_R$ messages montants M1, M2, M3 de la séquence sont émis sur des fréquences centrales respectives F1, F2, F3 différentes, et la fréquence centrale $F_D$ sur laquelle doit être émis le message descendant présente des écarts fréquentiels respectifs $\Delta F_D[1]$, $\Delta F_D[2]$, $\Delta F_D[3]$ prédéfinis par rapport auxdites fréquences centrales F1, F2 et F3.

Les écarts fréquentiels $\Delta F_D[1]$, $\Delta F_D[2]$, $\Delta F_D[3]$ sont donc associés de manière biunivoque aux différents messages montants M1, M2, M3 de la séquence, et sont connus a priori du réseau d'accès 30, ou peuvent être déterminés par ledit réseau d'accès 30.

Pour estimer la fréquence centrale $F_D$, le réseau d'accès 30 peut par exemple mémoriser, dans une mémoire non volatile, les écarts fréquentiels $\Delta F1$, $\Delta F2$ et $\Delta F3$ associés respectivement aux identifiants des messages montants M1, M2, M3, ainsi que l'écart fréquentiel $\Delta F_D$. Dans un tel cas, l'étape 64 d'estimation de la fréquence centrale $F_D$ du message descendant comporte des étapes (non représentées sur les figures) de :

- estimation de la fréquence de référence $F_R$ en fonction de la mesure de la fréquence centrale du message montant détecté et de l'écart fréquentiel prédéfini, associé à l'identifiant extrait, entre la fréquence de référence $F_R$ et la fréquence centrale du message montant détecté,
- estimation de la fréquence centrale $F_D$ du message descendant en fonction de la fréquence de référence $F_R$ estimée et de l'écart fréquentiel $\Delta F_D$.

Par exemple, si l'identifiant extrait correspond à l'identifiant du message montant M2 de la séquence, alors le réseau d'accès 30 retrouve l'écart fréquentiel $\Delta F2$ associé et peut estimer la fréquence de référence $F_R$ selon l'expression suivante :

$$F'_R = F'2 - \Delta F2$$

expression dans laquelle :

- F'$_R$ correspond à l'estimation de la fréquence de référence F$_R$,
- F'2 correspond à la valeur mesurée de la fréquence centrale F2 du message montant M2 de la séquence.

Ensuite, la fréquence centrale F$_D$ du message descendant peut être estimée selon l'expression suivante :

$$F'_D = F'_R + \Delta F_D$$

expression dans laquelle F'$_D$ correspond à la valeur estimée de la fréquence centrale F$_D$ du message descendant.

Suivant un autre exemple, le réseau d'accès 30 mémorise, dans une mémoire non volatile, les écarts fréquentiels $\Delta F_D[1]$, $\Delta F_D[2]$ et $\Delta F_D[3]$ associés respectivement aux identifiants des messages montants M1, M2, M3. Dans un tel cas, la fréquence centrale F$_D$ du message descendant est estimée en fonction de l'écart fréquentiel prédéfini, associé à l'identifiant extrait, entre la fréquence centrale du message montant détecté et la fréquence centrale F$_D$ sur laquelle doit être émis le message descendant.

Par exemple, si l'identifiant extrait correspond à l'identifiant du message montant M3 de la séquence, alors le réseau d'accès 30 retrouve l'écart fréquentiel $\Delta F_D[3]$ et peut estimer la fréquence centrale F$_D$ du message descendant selon l'expression suivante :

$$F'_D = F'3 + \Delta F_D[3]$$

expression dans laquelle F'3 correspond à la valeur mesurée de la fréquence centrale F3 du message montant M3 de la séquence.

B.4) Emission du message descendant

A l'issue de l'étape 64 d'estimation, le réseau d'accès 30 dispose d'une estimation F'$_D$ de la fréquence centrale F$_D$ sur laquelle le terminal 20 s'attend à recevoir le message descendant. Par conséquent, au cours de l'étape 65, le message descendant est émis sur la fréquence centrale F'$_D$, par une station de base 31 dans la couverture de laquelle se trouve le terminal 20 (par exemple la station de base 31 ayant détecté la séquence de messages montants émis par ledit terminal).

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant des terminaux 20 asynchrones en fréquences. L'invention est toutefois applicable à tout type de terminal 20, dès lors que le réseau d'accès 30 estime la fréquence centrale F$_D$ sur laquelle il doit émettre un message descendant à partir de la fréquence centrale mesurée d'un ou de plusieurs messages montants reçus de ce terminal 20. Par exemple, l'invention est applicable dès lors que le terminal 20 n'est pas, ou ne peut pas, se synchroniser en fréquences avec le réseau d'accès 30 avec suffisamment de précision et que par conséquent c'est le réseau d'accès 30 qui, pour émettre un message descendant à destination du terminal 20, se synchronise en fréquences avec ledit terminal 20.

**Revendications**

1. Procédé (50) d'émission, par un terminal (20) d'un système (10) de communication sans fil, de messages montants sur un lien montant à destination d'un réseau d'accès (30), **caractérisé en ce que** ledit procédé comporte des étapes, mises en oeuvre par ledit terminal (20), de :

   - (51) formation d'une séquence de N$_R$ messages montants, chaque message montant de la séquence comportant un même paquet de données utiles et des données de contrôle, lesdites données de contrôle comportant un identifiant du message montant parmi les N$_R$ messages montants de la séquence,
   - (52) émission des messages montants de la séquence sur des fréquences centrales respectives différentes,

   ledit terminal étant configuré pour recevoir un message descendant, émis en réponse à la séquence de messages montants, sur une fréquence centrale présentant des écarts fréquentiels respectifs prédéfinis par rapport aux fréquences centrales des messages montants de la séquence.

2. Procédé (50) selon la revendication 1, dans lequel les identifiants des messages montants de la séquence correspondent respectivement à des motifs de synchronisation prédéfinis différents.

3. Procédé (50) selon l'une des revendications 1 à 2, dans lequel les messages montants de la séquence sont émis successivement sans recouvrement temporel entre eux.

4. Terminal (20) **caractérisé en ce qu'**il comporte des moyens configurés pour mettre en oeuvre un procédé (50) d'émission sur un lien montant selon l'une des revendications précédentes.

**5.** Procédé (60) d'émission, par un réseau d'accès (30) d'un système (10) de communication sans fil, d'un message descendant sur un lien descendant à destination d'un terminal (20) en réponse à une séquence de messages montants émis par ledit terminal conformément à l'une des revendications 1 à 3, **caractérisé en ce que** ledit procédé comporte une étape (61) de recherche de messages montants sur le lien montant, lorsqu'un de ces messages montants est détecté, des étapes de :

- (62) mesure de la fréquence centrale du message montant détecté,
- (63) extraction de l'identifiant du message montant détecté,
- (64) estimation de la fréquence centrale sur laquelle doit être émis le message descendant en fonction de la mesure de la fréquence centrale et de l'identifiant extrait dudit message montant détecté,
- (65) émission du message descendant sur la fréquence centrale estimée.

**6.** Procédé (60) selon la revendication 5, dans lequel l'extraction de l'identifiant du message montant détecté comporte la comparaison dudit message montant détecté avec différents motifs de synchronisation prédéfinis, associés respectivement aux différents identifiants des messages montants de la séquence.

**7.** Procédé (60) selon l'une des revendications 5 à 6, dans lequel l'étape (64) d'estimation de la fréquence centrale du message descendant comporte des étapes de :

- estimation d'une fréquence de référence en fonction de la mesure de la fréquence centrale du message montant détecté et d'un écart fréquentiel prédéfini, associé à l'identifiant extrait, entre la fréquence de référence et la fréquence centrale du message montant détecté,
- estimation de la fréquence centrale du message descendant en fonction de la fréquence de référence estimée.

**8.** Procédé (60) selon l'une des revendications 5 à 6, dans lequel la fréquence centrale du message descendant est déterminée en fonction de l'écart fréquentiel prédéfini, associé à l'identifiant extrait, entre la fréquence centrale du message montant détecté et la fréquence centrale sur laquelle doit être émis le message descendant.

**9.** Station de base (31) **caractérisée en ce qu'**elle comporte des moyens configurés pour mettre en oeuvre un procédé (60) d'émission sur un lien descendant selon l'une des revendications 5 à 8.

**10.** Réseau d'accès (30) **caractérisé en ce qu'**il comporte des moyens configurés pour mettre en oeuvre un procédé (60) d'émission sur un lien descendant selon l'une des revendications 5 à 8.

**Patentansprüche**

**1.** Verfahren (50) zum Senden, durch ein Endgerät (20) eines drahtlosen Kommunikationssystems (10), von Uplink-Nachrichten auf einem Uplink an ein Zugangsnetz (30), **dadurch gekennzeichnet, dass** das Verfahren vom Endgerät (20) umgesetzte Schritte umfasst des:

- (51) Bildens einer Sequenz von $N_R$ Uplink-Nachrichten, wobei jede Uplink-Nachricht der Sequenz ein und dasselbe Nutzdatenpaket und Steuerdaten umfasst, wobei die Steuerdaten eine Kennung der Uplink-Nachricht aus den $N_R$ Uplink-Nachrichten der Sequenz umfassen,
- (52) Sendens der Uplink-Nachrichten der Sequenz auf verschiedenen jeweiligen Mittenfrequenzen,

wobei das Endgerät dafür konfiguriert ist, eine Downlink-Nachricht zu empfangen, die in Antwort auf die Sequenz von Uplink-Nachrichten auf einer Mittenfrequenz gesendet wird, die jeweilige vordefinierte Frequenzabstände in Bezug auf die Mittenfrequenzen der Uplink-Nachrichten der Sequenz aufweist.

**2.** Verfahren (50) nach Anspruch 1, wobei die Kennungen der Uplink-Nachrichten der Sequenz jeweils verschiedenen vordefinierten Synchronisationsmustern entsprechen.

**3.** Verfahren (50) nach einem der Ansprüche 1 bis 2, wobei die Uplink-Nachrichten der Sequenz nacheinander ohne zeitliche Überlagerung untereinander gesendet werden.

**4.** Endgerät (20), **dadurch gekennzeichnet, dass** es Mittel umfasst, die dafür konfiguriert sind, ein Verfahren (50) zum Senden auf einem Uplink nach einem der vorstehenden Ansprüche umzusetzen.

**5.** Verfahren (60) zum Senden, durch ein Zugangsnetz (30) eines drahtlosen Kommunikationssystems (10), einer Downlink-Nachricht auf einem Downlink an ein Endgerät (20) in Antwort auf eine Sequenz von Uplink-Nachrichten, die vom Endgerät in Übereinstimmung mit einem der Ansprüche 1 bis 3 gesendet werden, **dadurch gekennzeichnet, dass** das Verfahren einen Schritt (61) umfasst des Suchens von Uplink-Nachrichten auf dem Uplink, wenn eine dieser Uplink-Nachrichten erkannt wird, Schritte des:

- (62) Messens der Mittenfrequenz der erkannten Uplink-Nachricht,
- (63) Extrahierens der Kennung der erkannten Uplink-Nachricht,
- (64) Schätzens der Mittenfrequenz, auf der die Downlink-Nachricht gesendet werden muss, in Abhängigkeit von der Messung der Mittenfrequenz und der extrahierten Kennung der erkannten Uplink-Nachricht,
- (65) Sendens der Downlink-Nachricht auf der geschätzten Mittenfrequenz.

6. Verfahren (60) nach Anspruch 5, wobei das Extrahieren der Kennung der erkannten Uplink-Nachricht das Vergleichen der erkannten Uplink-Nachricht mit verschiedenen vordefinierten Synchronisationsmustern umfasst, die jeweils den verschiedenen Kennungen der Uplink-Nachrichten der Sequenz zugeordnet sind.

7. Verfahren (60) nach einem der Ansprüche 5 bis 6, wobei der Schritt (64) des Schätzens der Mittenfrequenz der Downlink-Nachricht Schritte umfasst des:

- Schätzens einer Referenzfrequenz in Abhängigkeit von der Messung der Mittenfrequenz der erkannten Uplink-Nachricht und einem vordefinierten, der extrahierten Kennung zugeordneten Frequenzabstand zwischen der Referenzfrequenz und der Mittenfrequenz der erkannten Uplink-Nachricht,
- Schätzens der Mittenfrequenz der Downlink-Nachricht in Abhängigkeit von der geschätzten Mittenfrequenz.

8. Verfahren (60) nach einem der Ansprüche 5 bis 6, wobei die Mittenfrequenz der Downlink-Nachricht in Abhängigkeit von dem vordefinierten, der extrahierten Kennung zugeordneten Frequenzabstand zwischen der Mittenfrequenz der erkannten Uplink-Nachricht und der Mittenfrequenz bestimmt wird, auf der die Downlink-Nachricht gesendet werden muss.

9. Basisstation (31), **dadurch gekennzeichnet, dass** sie Mittel umfasst, die dafür konfiguriert sind, ein Verfahren (60) zum Senden auf einem Downlink nach einem der Ansprüche 5 bis 8 umzusetzen.

10. Zugangsnetz (30), **dadurch gekennzeichnet, dass** es Mittel umfasst, die dafür konfiguriert sind, ein Verfahren (60) zum Senden auf einem Downlink nach einem der Ansprüche 5 bis 8 umzusetzen.

**Claims**

1. A method (50) for the transmission, by a terminal (20) of a wireless communication system (10), of uplink messages on an uplink to an access network (30), **characterized in that** said method includes steps, implemented by said terminal (20), of:

- (51) forming a sequence of $N_R$ uplink messages, each uplink message of the sequence including one and the same useful data packet and control data, said control data including an identifier of the uplink message among the $N_R$ uplink messages of the sequence,
- (52) transmitting the uplink messages of the sequence on different respective center frequencies,

said terminal being configured to receive a downlink message, transmitted in response to the sequence of uplink messages, on a center frequency having predefined respective frequency gaps with respect to the center frequencies of the uplink messages of the sequence.

2. The method (50) as claimed in claim 1, wherein the identifiers of the uplink messages of the sequence correspond respectively to different predefined synchronization patterns.

3. The method (50) as claimed in either of claims 1 and 2, wherein the uplink messages of the sequence are transmitted successively without a temporal overlap between them.

4. A terminal (20), **characterized in that** it includes means that are configured to implement a method (50) for transmission on an uplink as claimed in one of the preceding claims.

5. A method (60) for the transmission, by an access network (30) of a wireless communication system (10), of a downlink message on a downlink to a terminal (20) in response to a sequence of uplink messages transmitted by said terminal in accordance with one of claims 1 to 3, **characterized in that** said method includes a step (61) of searching for uplink messages on the uplink, when one of these uplink messages is detected, steps of:

- (62) measuring the center frequency of the detected uplink message,
- (63) extracting the identifier of the detected uplink message,
- (64) estimating the center frequency on which the downlink message has to be transmitted as a function of the measurement of the center frequency and of the extracted identifier of said detected uplink message,
- (65) transmitting the downlink message on the estimated center frequency.

**6.** The method (60) as claimed in claim 5, wherein extracting the identifier of the detected uplink message includes comparing said detected uplink message with various predefined synchronization patterns that are respectively associated with the various identifiers of the uplink messages of the sequence.

**7.** The method (60) as claimed in either of claims 5 and 6, wherein the step (64) of estimating the center frequency of the downlink message includes steps of:

- estimating a reference frequency as a function of the measurement of the center frequency of the detected uplink message and of a predefined frequency gap, associated with the extracted identifier, between the reference frequency and the center frequency of the detected uplink message,
- estimating the center frequency of the downlink message as a function of the estimated reference frequency.

**8.** The method (60) as claimed in either of claims 5 and 6, wherein the center frequency of the downlink message is determined as a function of the predefined frequency gap, associated with the extracted identifier, between the center frequency of the detected uplink message and the center frequency on which the downlink message has to be transmitted.

**9.** A base station (31), **characterized in that** it includes means that are configured to implement a method (60) for transmission on a downlink as claimed in one of claims 5 to 8.

**10.** An access network (30), **characterized in that** it includes means that are configured to implement a method (60) for transmission on a downlink as claimed in one of claims 5 to 8.

10

20

20

20

31

30

32

31

31

**Fig. 1**

Paquet de données utiles

| Formation d'un séquence de $N_R$ messages montants | 51 |

| Emission des $N_R$ messages montants sur des fréquences centrales différentes | 52 |

50

**Fig. 2**

610   -61-   611

| Mesure de la fréquence centrale du message montant détecté | 62 |

| Extraction de l'identifiant du message montant détecté | 63 |

60

| Estimation de la fréquence centrale du message descendant | 64 |

| Emission du message descendant | 65 |

**Fig. 3**

**EP 3 266 256 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6130914 A